# EUROPEAN PATENT APPLICATION

(11) **EP 4 160 755 A1**
(43) Date of publication of application: **05.04.2023**
(21) Application number: 22803860.0
(22) Date of filing: 12.05.2022
(51) Int. Cl.: H01M 4/72, H01M 50/528

(54) **CURRENT COLLECTION PLATE AND BATTERY**

(30) Priority: 21.05.2021 CN 202121112734 U
(71) Applicant: Eve Power Co., Ltd., Jingmen, Hubei 448000 (CN)
(72) Inventor: HUANG, Liming, Jingmen High-Tech Zone Jingmen, Hubei 448000 (CN); YUE, Liangliang, Jingmen High-Tech Zone Jingmen, Hubei 448000 (CN); LIU, Jing, Jingmen High-Tech Zone Jingmen, Hubei 448000 (CN); XU, Yuebin, Jingmen High-Tech Zone Jingmen, Hubei 448000 (CN); HE, Wei, Jingmen High-Tech Zone Jingmen, Hubei 448000 (CN)
(74) Representative: HGF
(86) International application number: PCT/CN2022/092418
(87) International publication number: WO 2022/242538

(57) **Abstract**

Provided is a current collector disk, the current collector disk includes a welding disk and multiple support feet connected to the welding disk, the welding disk is provided with multiple through holes, the multiple through holes vertically penetrate through an upper end surface and a lower end surface of the welding disk, and a direction of end surfaces, facing away the welding disk, of the multiple support feet is the same as a direction of the lower end surface of the welding disk. Further provided is a battery, and the battery is provided with the current collector disk described above.

## Description

The present application claims priority to Chinese Patent Application No. 202121112734.0, filed with the China National Intellectual Property Administration (CNIPA) on May. 21, 2021, the disclosure of which is incorporated herein by reference in its entirety.

### TECHNICAL FIELD

The present application relates to the field of batteries, and for example, to a current collector disk and a battery provided with the current collector disk.

### BACKGROUND

A current collector disk is one of the important components of a battery and is configured to electrically connect a cell of the battery with a positive electrode terminal or a negative electrode terminal of the battery. The technical problems existing in the current collector disk are that: the current collector disk includes a welding disk and a tab, an end surface of the welding disk is welded and fixed to an end surface of the cell, the tab is configured to be connected to a terminal, due to a fact that the internal space of the battery is limited, the tab is bent, and the tab has the risk of being damaged in a bending process; the tab and the welding disk are generally connected by welding, and a connection internal resistance of the tab is relatively high, so that the requirement of high-rate charging and discharging of the battery cannot be satisfied; in order to enable the battery to perform the high-rate charging and discharging, a thickness of the tab needs to be increased, however, the too thick tab is not easy to bend and is not beneficial to packaging of the battery.

### SUMMARY

The present application provides a current collector disk and a battery. The current collector disk may satisfy the requirement of high-rate charging and discharging of the battery.

The present application provides a current collector disk. The current collector disk includes a welding disk and multiple support feet connected to the welding disk, where the welding disk is provided with multiple through holes, the multiple through holes vertically penetrate through an upper end surface and a lower end surface of the welding disk, and a direction of end surfaces, facing away the welding disk, of the multiple support feet is the same as a direction of the lower end surface of the welding disk.

The present application further provides a battery, and the battery is provided with the current collector disk described above.

### BRIEF DESCRIPTION OF DRAWINGS

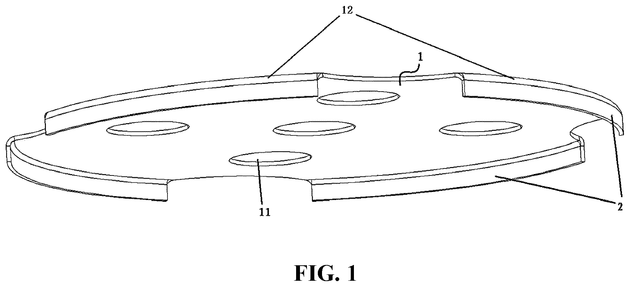

FIG. 1 is a structural schematic diagram of a current collector disk provided in an embodiment of the present application.
1, Welding disk; 11, Through holes; 12, Arc-shaped protrusion; 2, Support foot;

### DETAILED DESCRIPTION

The specific embodiments described herein are merely illustrative of the present application.

In the description of the present application, an orientation or a positional relationship indicated by the terms "center", "longitudinal", "lateral", "length", "width", "thickness", "upper", "lower", "front", "rear", "left", "right", "vertical", "horizontal", "top", "bottom", "inner", "outer", "clockwise", "counterclockwise", and the like is based on an orientation or a positional relationship shown in the drawings, and is only for the purpose of facilitating the description of the present application and simplifying the description, and is not intended to indicate or imply that the device or element in question must have a particular orientation, be constructed and operated in a particular orientation, and thus cannot be understood as a limitation of the present application. Furthermore, the terms "first" and "second" are used for descriptive purposes only and are not to be understood as indicating or implying relative importance or as implicitly indicating a number of technical features indicated. Thus, features defined as "first" or "second" may explicitly or implicitly include one or more of the described features. In the description of the present application, "multiple" means two or more, unless otherwise defined.

In the description of the present application, unless specified and limited otherwise, the terms "mounted," "interconnected," and "connected" are to be understood broadly and, for example, may be fixedly connected, may be detachably connected, or may be integrally connected; may be mechanically connected, may be directly connected, may be indirectly connected through an intermediate medium, may be internally communicated with each other or may be interactively connected to each other. The meaning of the above terms in the present application may be understood by those of ordinary skill in the art according to circumstances.

In the present application, unless specified and limited otherwise, a first feature being "on" or "under" a second feature may include that the first feature and the second feature are in direct contact, and may also include that the first feature and the second feature are not in direct contact but are in contact through another feature between them. Moreover, the first feature being "on", "above" and "over" the second feature includes the first feature being directly above and obliquely above the second feature, or simply indicates that the first feature is at a higher level than the second feature. The first feature being "under", "below" and "beneath" the second feature includes the first feature being directly below and obliquely below the second feature, or simply indicates that the first feature is at a lower level than the second feature.

An embodiment of the present application provides a current collector disk. The current collector disk includes a welding disk and multiple support feet connected to the welding disk. The welding disk is provided with multiple through holes, the multiple through holes vertically penetrate through an upper end surface and a lower end surface of the welding disk, and a direction of end surfaces, facing away the welding disk, of the multiple support feet is the same as a direction of the lower end surface of the welding disk.

The upper end surface of the welding disk is fixedly connected to a negative electrode end surface of a cell, and the end surfaces, facing away the welding disk, of the multiple support feet are fixedly connected to a negative electrode terminal.

In an embodiment, an angle range of an inner angle between the multiple support feet and the welding disk is 90° ~ 135°.

In an embodiment, the multiple support feet are disposed vertically.

In an embodiment, the multiple support feet are connected to the lower end surface of the welding disk.

In an embodiment, a sidewall of the welding disk is provided with multiple arc-shaped protrusions, and the multiple support feet disposed vertically are connected to the multiple arc-shaped protrusions.

In an embodiment, the multiple arc-shaped protrusions and the multiple support feet are circumferentially and uniformly distributed about a central axis of the welding disk, and a gap exists between adjacent support feet of the multiple support feet.

In an embodiment, a number of arc-shaped protrusions and a number of support feet are four.

In an embodiment, the multiple support feet are connected to the welding disk in a welded fixation manner.

In an embodiment, the multiple support feet and the welding disk are integrally disposed.

As shown in FIG. 1, a current collector disk having a novel structure provided in an embodiment of the present application includes a welding disk 1 and four support feet 2 connected to the welding disk 1. Five through holes 11 formed on the welding disk 1 vertically penetrate through an upper end surface and a lower end surface of the welding disk 1. The through holes 11 are formed on the welding disk 1, so that the electrolyte may flow into a battery through the through holes 11 and is in contact with the cell. The upper end surface of the welding disk 1 is configured to be welded and fixed with an electrode end surface of the cell. Four arc-shaped protrusions 12 are disposed on a sidewall of the welding disk 1 and are circumferentially and uniformly distributed around a central axis of the welding disk 1, and the four support feet 2 are connected to the four arc-shaped protrusions 12, respectively. The support feet 2 are vertically disposed, and the end surface, facing away the welding disk 1, of the support foot 2 is a flat surface, a direction of the flat surface is the same as a direction of the lower end surface of the welding disk 1, and the flat surface is configured to be welded and fixed with an electrode terminal of the battery.

The four support feet 2 are circumferentially and uniformly distributed around the central axis of the welding disk 1, and a gap exists between adjacent support feet 2.

A circumferential side surface of the welding disk 1 is provided with a concave portion between two adjacent arc-shaped protrusions 12, and due to the disposition of the concave portion, so that the current collector disk can be prevented from being deformed due to an interference between portions except the support feet 2 and a housing of the battery caused by a problem of machining precision, and further, a separator and the like can be prevented from being possibly damaged, whereby the safety of the battery is improved.

The power battery adopts the current collector disk provided in this embodiment, so that an internal resistance of the battery may be reduced, and the requirement of high-rate charging and discharging may be satisfied.

The support feet in the present application play a role of a tab in the current collector disk, but the support feet need not be bent, so that thicknesses of the support feet may be increased. The welding disk may be connected to the multiple support feet, so that an overcurrent area between the welding disk and the negative electrode terminal of the battery is increased, that is, the overcurrent capacity of the current collector disk is improved, whereby the battery provided with the current collector disk may adapt to the high-rate charging and discharging.

An embodiment of the present application further provides a battery, and the battery is provided with the current collector disk described above.

Various technical features of the above-described embodiments may be combined arbitrarily, and in order to make the description concise, all possible combinations of the various technical features in the above-described embodiments are not described.

## Claims

1. A current collector disk, comprising a welding disk and a plurality of support feet connected to the welding disk, wherein the welding disk is provided with a plurality of through holes, the plurality of through holes vertically penetrate through an upper end surface and a lower end surface of the welding disk, and a direction of end surfaces, facing away the welding disk, of the plurality of support feet is the same as a direction of the lower end surface of the welding disk.

2. The current collector disk of claim 1, wherein the plurality of support feet are connected to the welding disk in a welded fixation manner.

3. The current collector disk of claim 1, wherein the plurality of support feet and the welding disk are integrally disposed.

4. The current collector disk of claim 1, wherein the plurality of support feet are disposed vertically.

5. The current collector disk of claim 4, wherein the plurality of support feet are connected to the lower end surface of the welding disk.

6. The current collector disk of claim 4, wherein a sidewall of the welding disk is provided with a plurality of arc-shaped protrusions, and the plurality of support feet are connected to the plurality of arc-shaped protrusions.

7. The current collector disk of claim 6, wherein the plurality of arc-shaped protrusions and the plurality of support feet are circumferentially and uniformly distributed about a central axis of the welding disk, and a gap exists between adjacent support feet of the plurality of support feet.

8. The current collector disk of claim 7, wherein a number of arc-shaped protrusions and a number of support feet are each four.

9. A battery, provided with a current collector disk, wherein the current collector disk comprises a welding disk and a plurality of support feet connected to the welding disk; the welding disk is provided with a plurality of through holes, the plurality of through holes vertically penetrate through an upper end surface and a lower end surface of the welding disk, and a direction of end surfaces, facing away the welding disk, of the plurality of support feet is the same as a direction of the lower end surface of the welding disk.

10. The battery of claim 9, wherein the plurality of support feet are connected to the welding disk in a welded fixation manner.

11. The battery of claim 9, wherein the plurality of support feet and the welding disk are integrally disposed.

12. The battery of claim 9, wherein the plurality of support feet are disposed vertically.

13. The battery of claim 12, wherein the plurality of support feet are connected to the lower end surface of the welding disk.

14. The battery of claim 12, wherein a sidewall of the welding disk is provided with a plurality of arc-shaped protrusions, and the plurality of support feet are connected to the plurality of arc-shaped protrusions.

15. The battery of claim 14, wherein the plurality of arc-shaped protrusions and the plurality of support feet are circumferentially and uniformly distributed about a central axis of the welding disk, and a gap exists between adjacent support feet of the plurality of support feet.

16. The battery of claim 15, wherein a number of arc-shaped protrusions and a number of support feet are each four.
